Europäisches Patentamt

European Patent Office

Office européen des brevets

(11) Veröffentlichungsnummer: **0 406 561 A1**

## (12) EUROPÄISCHE PATENTANMELDUNG

(21) Anmeldenummer: 90110050.3

(22) Anmeldetag: 28.05.90

(51) Int. Cl.5: **B01D 46/00**, B01D 39/06, C03B 5/16

(30) Priorität: 01.07.89 DE 3921720

(43) Veröffentlichungstag der Anmeldung:
**09.01.91 Patentblatt 91/02**

(84) Benannte Vertragsstaaten:
**AT BE CH DE DK ES FR GB GR IT LI LU NL SE**

(71) Anmelder: **BETEILIGUNGEN SORG GMBH & CO. KG KG**
**Postfach 520, Stoltestrasse 23**

**D-8770 Lohr am Main(DE)**

(72) Erfinder: **Pieper, Helmut, Dipl.-Ing.**
**Buchenstrasse 19**
**D-8770 Lohr/Main(DE)**

(74) Vertreter: **Schulze Horn, Stefan, Dipl.-Ing. M.Sc.**
**Goldstrasse 36**
**D-4400 Münster(DE)**

(54) Filtereinrichtung für Staub und schwefelhaltige Verbindungen enthaltende Abgase von Glasschmelzöfen.

(57) Die Erfindung betrifft eine Filtereinrichtung für Staub und schwefelhaltige Verbindungen enthaltende Abgase von Glasschmelzöfen.

Die neue Filtereinrichtung ist dadurch gekennzeichnet, daß das Filtermedium Mineralwolle (1) ist, die mittels mindestens eines für den Gasdurchlaß geeigneten temperaturbeständigen Bandes (2) durch den Abgasstrom bewegbar ist.

Fig. 1

# FILTEREINRICHTUNG FÜR STAUB UND SCHWEFELHALTIGE VERBINDUNGEN ENTHALTENDE ABGASE VON GLASSCHMELZÖFEN

Die Erfindung betrifft eine Filtereinrichtung für Staub und schwefelhaltige Verbindungen enthaltende Abgase von Glasschmelzöfen.

Zur Zeit sind in Glasschmelzwannen zur Staubabscheidung Elektrofilter oder Tuchfilter bekannt. Beide Filtertechniken sind mit erheblichen Kosten verbunden und haben zum Teil auch technische Probleme. So ist insbesondere der Temperaturbereich, in dem diese Filter arbeiten, relativ eng begrenzt. Im Falle des Elektrofilters fallen erhebliche Investitionskosten und auch Betriebskosten an. Im Falle von Tuchfiltern ist eine ganz exakte Temperatur einzuhalten, weil sonst bei Unterschreitung der Kondensationstemperatur die Filter zerstört werden oder bei Überschreitung einer Temperatur im Bereich von 200° die Filtertücher, welche normalerweise aus Kunststoff gefertigt sind, verbrennen. Insbesondere ist der Einsatz von Tuchfiltern bei hohem Sulfatanteil des Abgases äußerst problematisch, weil die Oxidation des Natriumsulfats in Natriumbisulfat durch das im Abgas befindlichen $SO_3$ zu sehr feinen Stäuben führt, die zur Verklebung des Filters führen.

Es ist dagegen Aufgabe der Erfindung, ein Filter zu entwickeln, welches exakt auf die Belange der Glasindustrie abgestimmt ist, welches sehr einfach aufgebaut ist und welches weitgehend unabhängig von den Abgastemperaturen nach Austritt aus der Glaswanne arbeiten kann. Darüber hinaus soll das Filtermedium aus einem Material bestehen, welches mit dem abgeschiedenen Staub wieder der Glaswanne zugesetzt werden kann, so daß eine rückstandslose vollständige Entsorgung möglich ist.

Diese Aufgabe wird erfindungsgemäß dadurch gelößt, daß das Filtermedium Mineralwolle ist, die mittels mindestens eines für den Gasdurchlaß geeigneten temperaturbeständigen Förderbandes durch den Abgasstrom bewegbar ist.

Weitere vorteilhafte Ausgestaltungen der Erfindung sind in den Unteransprüchen 2 bis 10 näher beschrieben.

Da nach Wiedereinführung des Filtermediums in den Glasschmelzofen keinerlei nichtgasförmige Stoffe zurückbleiben, daß heißt eine vollständig rückstandslose Entsorgung erfolgt, kann angesichts der Einfachheit des Erfindungsgegenstandes von einer idealen Lösung der anstehenden Probleme gesprochen werden.

Im folgenden werden Ausführungsbeispiele der Erfindung anhand von Zeichnungen näher beschrieben. Es zeigen:

Figur 1 schematisch einen Vertikalschnitt durch eine Ausführungsform der Erfindung,

Figur 2 die Aufsicht auf eine Ausführungsform mit zwei Bändern,

Figur 3 einen Vertikalschnitt durch die Ausführungsform gemäß Figur 2,

Figur 4 eine Aufsicht auf eine Reihe nebeneinander angeordneter, parallelgeschalteter Filter und

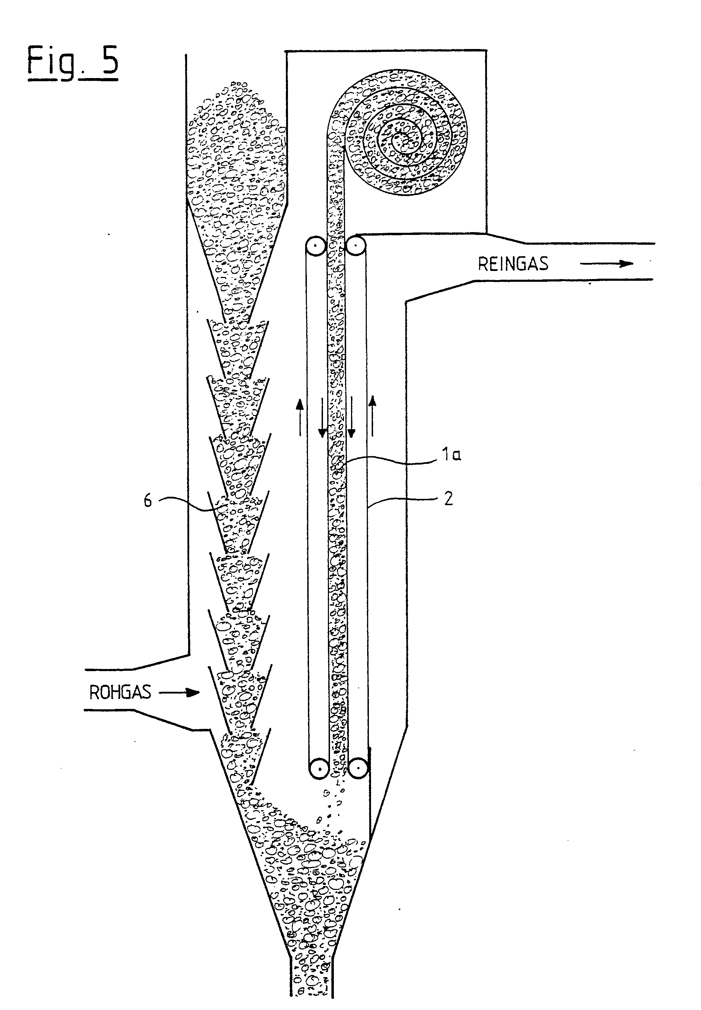

Figur 5 ein Vertikalschnitt durch ein das Filtermaterial in Mattenform verwendendes Filter mit strömungsmäßig vorgeschalteter Gemenge und/oder Scherbenvorwärmung.

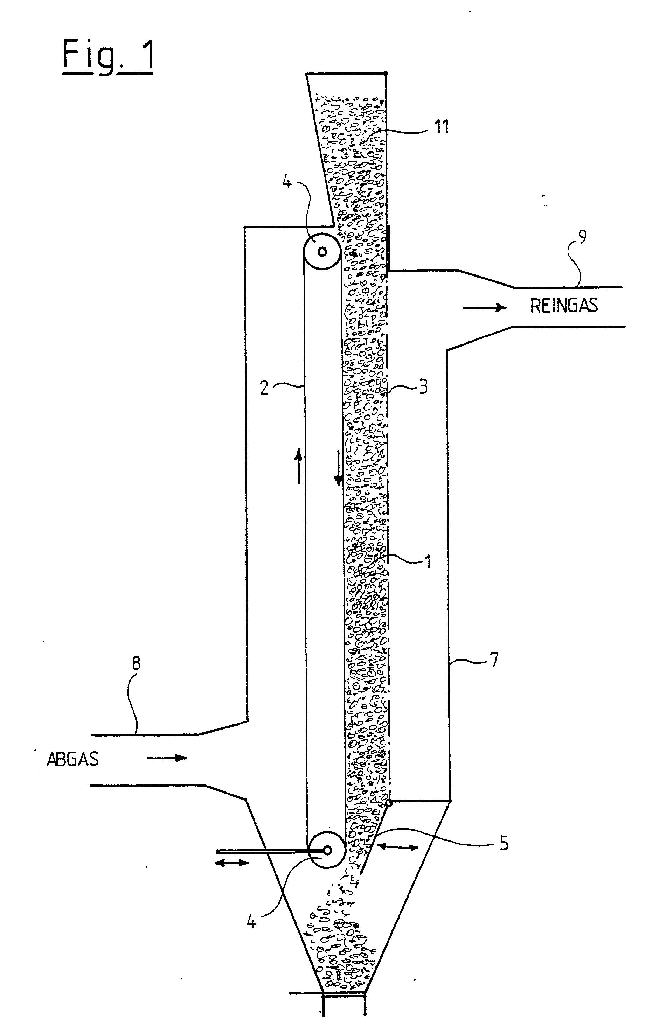

Gemäß Figur 1 wird in einem senkrecht stehenden Stahlbunker bzw. Gehäuse 7 entsprechender Dimensionierung lose Glaswolle oder Gesteinswolle 1 oder ein gesteptes Band aus Glaswolle oder Steinwolle 1 zwischen zwei endlose Bänder bzw. zwischen einem Band 2 und einer perforierten Wand bzw. Lochblech 3 eingebracht, wobei das Stahlband 2 aus einem Drahtgeflechtband besteht, wie es in der Glasindustrie für die Kühlöfen bis zu Temperaturen von 700° C benutzt wird.

Figur 1 zeigt eine solche Anlage mit einem Band 2 und einer gelochten Rückwand 3. Die Glaswolle 1 wird im oberen Teil der Anlage in einen Vorratsbunker 11 eingegeben, der dann geschlossen wird, um Falschlufteintritt zu vermeiden. Die Glaswolle wird von dem sich bewegenden Band 2 nach unten transportiert, wobei die Breite der transportierten Schicht durch eine bewegliche Klappe 5 im unteren Teil bestimmt werden kann. Dabei ist die Klappe 5 so angebracht, daß in erster Linie die Schicht, die nahe dem Band 2 liegt, transportiert wird, weil dies die Schicht ist, die am meisten mit Staub kontaminiert ist. Über die Stellung der Klappe 5 kann nun bestimmt werden, in welcher Breite die mit Staub beladene Schicht ausgetragen wird.

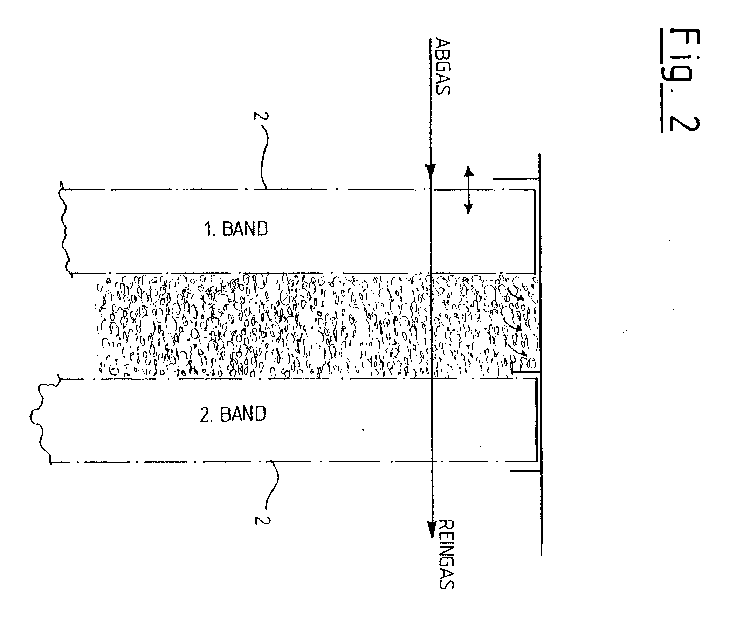

Um zu verhindern, daß in der Wolle 1 offene Kavernen auftreten, die einen Durchtritt von ungefiltertem Abgas mit sich bringen würden, ist die frei aufgehängte untere Umlenkrolle 4 des Bandes korizontal verstellbar, so daß die Wolle 1 zwischen dem Band 2 und der perforierten Stahlwand 3 mehr oder weniger zusammengedrückt werden kann. Durch dieses Zusammendrücken der Wolle 1 wird auch im seitlichen Teil die Abdichtung zum Bunker 11 gewährleistet. Die Wolle 1 wird durch den Druck des Bandes gegen die Seitenwand des Bunkers 7 gepreßt, so daß hier eine Abdichtung entsteht. Darüber hinaus können die Bänder, gemäß Figur 2, noch seitlich mit einer Labyrinthdichtung 12 versehen sein.

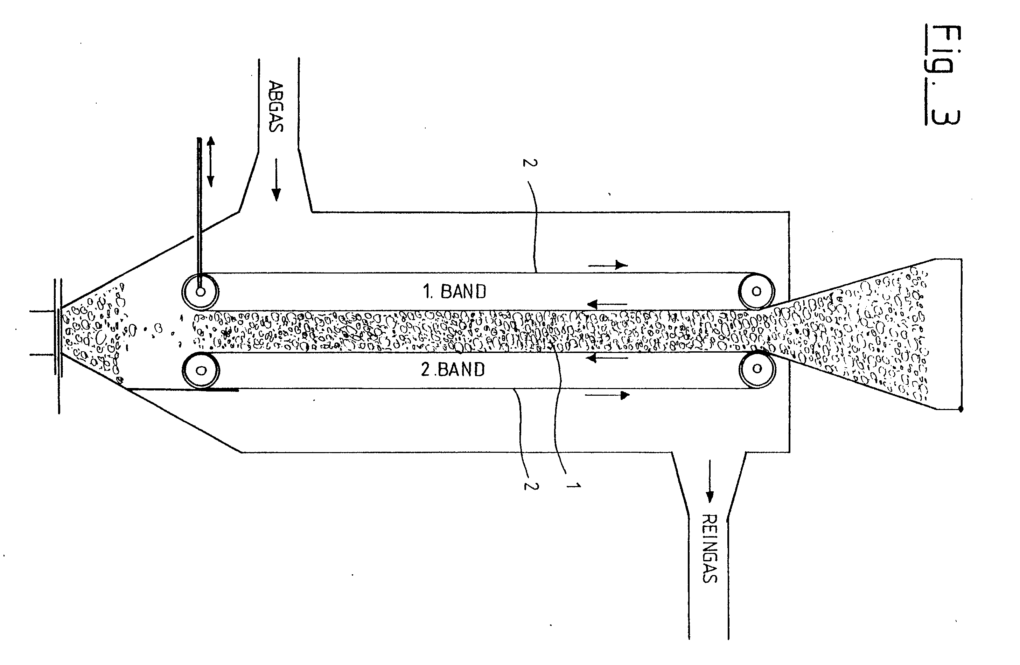

In Figur 3 ist ein Ausführungsbeispiel mit zwei Bändern 2 gezeigt, welche mit unterschiedlicher Geschwindigkeit laufen können, so daß der der Rohgasseite zugewandte Teil stärker ausgetragen wird. Die Geschwindigkeit der Bänder 2 und damit die Menge, die an Wolle 1 bzw. Filtermedium durchgesetzt wird, kann abhängig vom Druckverlust im System gesteuert werden. Je stärker die Wolle 1 mit Staub zugesetzt wird, um so höher wird der Druckverlust werden, d. h. daß bei höherer Bandgeschwindigkeit der Druckverlust wieder abnimmt. Dadurch kann dieser Filter immer mit exakt gleichem Druckverlust und damit auch mit gleichem Abscheidegrad betrieben werden.

Die Tatsache, daß der Filter sich dauernd erneuert, führt dazu, daß die Filterflächen wesentlich kleiner gehalten werden können als das bei Tuchfiltern üblich ist, da dort die spezifische Belastung der Filterfläche aufgrund der Tatsache, daß sich die Filterfläche mit einer Staubschicht überzieht, sehr groß gehalten werden muß.

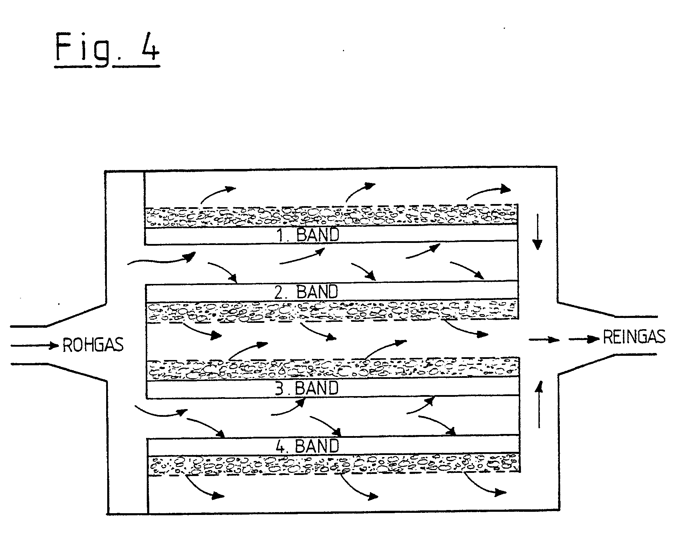

Um, wenn nötig, auch eine große Filterfläche auf relativ kleinen Raum unterzubringen, kann die Anordnung der Bänder und damit der Abgaswege gemäß Figur 4 in Parallelschaltung erfolgen.

Statt der losen Wolle 1 können auch gesteppte Matten 1a auf Rollen benutzt werden, wobei zweckmäßigerweise das Garn zum Absteppen der Matten 1a aus einem Kunststoff besteht, der spätestens bei 160° C verbrennt. Durch den Einsatz von vorgestepptem Material wird sichergestellt, daß immer die die gleiche Materialschichtdicke im Filter ist. Dadurch, daß die Steppfäden verbrennen, fällt die Matte jedoch beim Ausgang aus dem Filter auseinander, so daß die lose Wolle leicht ausgetragen werden kann.

Zweckmäßigerweise wird diese Art Filter mit einem bekannten Scherbenvorwärmer 6 kombiniert, in welchem die Temperatur der Abgase und damit das Volumen der Abgase ganz erheblich reduziert wird, so daß der Abscheidegrad sich wesentlich erhöht. Darüber hinaus kann den Scherben Kalkhydrat zugesetzt werden, so daß sich das gasförmige $SO_2$ mit dem Kalkhydrat zu Calciumsulfat verbindet, das dann wiederum im nachgeschalteten Filter leicht abgeschieden werden kann. Es ist ersichtlich, daß die erfindungsgemäße Art Filter im Falle, daß Glaswolle eingesetzt wird, bis zu Temperaturen von 500 - 600° C und im Falle, daß Steinwolle eingesetzt wird, bis 700° C betrieben werden kann. Er ist damit weitgehend anabhängig von der Abgastemperatur des Schmelzofens.

Da es sich bei dem Filtermaterial um Glas handelt, bestehen keine Bedenken, dieses Glas mit den Scherben oder mit anderen Rohmaterialien wieder in die Wanne einzugeben. Die Benutzung von Steinwolle beschränkt sich auf Farbglaswannen. DAmit ist eine absolut sichere und rückstandsfreie Entsorgung des Filterstaubs gewährleistet.

**Ansprüche**

1. Verfahren zur Filterung von Staub und schwefelhaltige Verbindungen enthaltenden Abgasen von Glasschmelzöfen, dadurch gekennzeichnet, daß der Staub und die Schwefelverbindungen an einem feinfaserigen anorganischem Filtermedium abgeschieden werden, welches kontinuierlich in den Glasschmelzofen zurückgeführt werden.
2. Verfahren nach Anspruch 1, dadurch gekennzeichnet, daß das feinfaserige Filtermedium Mineral- oder Glaswolle (1) ist, die mittels mindestens eines für den Gasdurchlaß geeigneten temperaturbeständigen Bandes (2) durch den Abgasstrom bewegt wird.
3. Verfahren nach wenigstens einem der Ansprüche 1 oder 2, dadurch gekennzeichnet, daß dem Rohgas Kalkhydrat zugesetzt wird.
4. Filtereinrichtung zur Durchführung des Verfahrens nach wenigstens einem der vorhergehenden Ansprüche, dadurch gekennzeichnet, daß die Mineralwolle Mattenform aufweist.
5. Filtereinrichtung nach Anspruch 4, dadurch gekennzeichnet, daß die Führung der Mineralwolle durch zwei gleichsinnig laufende Bänder (2) oder durch ein Band (2) und ein parallel dazu verlaufendes Lochblech (3) erfolgt.
6. Filtereinrichtung nach wenigstens einem der Ansprüche 4 und 5, dadurch gekennzeichnet, daß das Förderband (2) aus einem Drahtgeflecht besteht.
7. Filtereinrichtung nach wenigstens einem der Ansprüche 4 bis 6, dadurch gekennzeichnet, daß die untere Umlenkrolle (4) des Bandes (2) in der Richtung quer zur Banderstreckung beweglich ist.
8. Filtereinrichtung nach wenigstens einem der Ansprüche 4 bis 7, dadurch gekennzeichnet, daß neben der unteren Umlenkrolle (4) eine steuerbare Klappe (5) zur Einstellung des Austrittsquerschnitts der Mineralwolle aus dem Filterbereich vorhanden ist.
9. Filtereinrichtung nach wenigstens einem der Ansprüche 4 bis 8, dadurch gekennzeichnet, daß eine Anzahl von Bändern (2) mit dem dazugehörigen Filtermedium (1) zum gleichzeitigen Gasdurchtritt parallel angeordnet ist.
10. Filtereinrichtung nach wenigstens einem der Ansprüche 4 bis 9, dadurch gekennzeichnet, daß in Gasströmungsrichtung vor dem Filtermedium (1) mit dem dazugehörigen Band (2) ein Vorwärmer (6) zur Abkühlung des Gases und Aufheizung des Gemenges und/oder der einzugebenden Scherben angeordnet ist.
11. Filtereinrichtung nach wenigstens einem der Ansprüche 4 bis 10, dadurch gekennzeichnet, daß die Mineralwolle in Mattenform mit sich bei höherer Temperatur auflösenden oder verbrennenden Kunststofffäden abgesteppt ist.
12. Filtereinrichtung nach wenigstens einem der Ansprüche 5 bis 11, dadurch gekennzeichnet, daß die Bänder (2) seitlich in einer Labyrinthdichtung (12) geführt werden.

# Fig. 1

# Fig. 2

ABGAS

REINGAS

2

1. BAND

2. BAND

2

# Fig. 3

REINGAS

1. BAND

2. BAND

1

2

2

ABGAS

# Fig. 4

ROHGAS — ... — REINGAS

1. BAND
2. BAND
3. BAND
4. BAND

# Fig. 5

REINGAS →

1a

2

6

ROHGAS →

## EINSCHLÄGIGE DOKUMENTE

| Kategorie | Kennzeichnung des Dokuments mit Angabe, soweit erforderlich. der maßgeblichen Teile | Betrifft Anspruch | KLASSIFIKATION DER ANMELDUNG (Int Cl⁵) |
|---|---|---|---|
| A | DE - A1 - 2 719 339 <br> (BAYER) <br> * Patentansprüche * <br> -- | 1,3 | B 01 D 46/00 <br> B 01 D 39/06 <br> C 03 B 5/16 |
| A | US - A - 4 410 347 <br> (KRUMWIEDE) <br><br> ---- | 1 | |

RECHERCHIERTE
SACHGEBIETE (Int Cl⁵)

B 01 D
B 09 B
C 03 B
C 03 C

Der vorliegende Recherchenbericht wurde für alle Patentansprüche erstellt

| Recherchenort | Abschlußdatum der Recherche | Prüfer |
|---|---|---|
| WIEN | 19-09-1990 | BECKER |